# EUROPEAN PATENT APPLICATION

(11) **EP 1 887 751 A1**
(43) Date of publication of application: **13.02.2008**
(21) Application number: 06016880.4
(22) Date of filing: 11.08.2006
(51) Int. Cl.: H04L 29/06

(54) **Method and system for synchronizing at least two media streams within one push-to-talk-over-cellular session**

(71) Applicant: Nokia Siemens Networks GmbH & Co. KG, 81541 München (DE)
(72) Inventor: The designation of the inventor has not yet been filed

(57) **Abstract**

A method for synchronizing at least two media streams within one push-to-talk-over-cellular session where the service providing receiving client receives at least one first message containing first media and at least one second message containing second media and said first message contains a first relative time information, e. g. a RTP timestamp and said second message contains a second relative (RTP timestamp) time information and that first relative time information and second relative time information could be used by the service providing receiving client for delivering both media to a media recipient in a synchronized way.

The sending PoC client, PoC server and receiving PoC client must be changed in the way that the synchronization information needed for the media streams are provided in the Talk Burst Control Protocol messages or Media Burst Control Protocol messages of the Media-floor Control Entity.

## Description

### Background of the Invention

The invention relates to the Push to Talk over Cellular (short: Push over Cellular, PoC) Service in the Mobile Network. Push to talk calls are half duplex communications - while one person speaks, the other(s) listen. A Push to talk connection is typically connected virtually instantaneously.

There are proprietary implementations and the Standardization Organization "Open Mobile Alliance" defines standards for PoC. A PoC Session is a certain version of a SIP Session. A PoC Client is a PoC functional entity that resides on the PoC User Equipment that supports the PoC service. The PoC Server implements e. g. the 3GPP/3GPP2 IMS application level network functionality for the PoC service. A PoC Server may perform the role of the Controlling PoC Function or Participating PoC Function, or both at the same time.

Open Mobile Alliance Push-To-Talk-over-Cellular version 2.0 states that within PoC Session a PoC Client can send at the same time multiple media streams of different media types: audio, video, still image, text or file. The half-duplex concept is extended in PoCv2.0 above the PoCv1.0 in the way that the media streams can use indepent half duplex arbitration (so called Media-floor Control Entity - a state machine which allows the sending and receiving of the media stream and which is based on the Talk Burst Control Protocol or Media Burst Control Protocol). If two media streams are bound to different Media-floor Control Entities, one PoC Session Participant can send media of one media stream, while other PoC Session Participants can send media of the other media stream at the same time. If two media streams are bound to the same Media-floor Control Entity, when one PoC Session Participant sends media of the media streams, no other PoC Session Participant can send media of the media streams at the same time.
In the case such media streams are continuous media types (meaning media with an inherent notion of time) - e. g. Video with Audio or Video with PoC Speech, the media streams may need to be synchronized at the receiving PoC Clients in order to give to the PoC User a consistent experience (when the talker talks, playback of his voice must match his face changes).

In Request for Comments RFC 3550: "RTP: A Transport Protocol for Real-Time Applications" (which standardizes both the Real Time Transport Protocol RTP and Real Time Control Protocol RTCP) is described a method using a standardized packet format for delivering audio and video over the Internet. This method relies on the periodical sending of NTP (Network Time Protocol) timestamps and RTP timestamps in RTCP SR (Sender Report) packets. Unfortunately, PoC Version 1.0 does not mandate usage of RTCP and even if supported, it does not require periodical sending of RTCP SR packets.

RTP without RTCP does not solve the problem either: for Video and Audio or Video and PoC Speech separate RTP streams are set up and initialized. While it would be possible to set up the RTP timestamp of all the RTP streams to a fixed value at the initialization and let the terminating PoC Client evaluate the real time of the received samples (based on the current values of RTP timestamps of both streams, the initial RTP timestamp value and the individual RTP stream RTP timestamp frequencies), this is not possible since the RFC 3550 states the initial values SHOULD be set to random value.

Thus the terminating PoC Client cannot know the matching values of RTP timestamp of each RTP stream and therefore a shift between Video and (Audio or PoC Speech) playbacks is possible.

It is an object of the invention to enable a synchronization of at least two media streams in a PoC Session in a manner that when the media streams arrive at the receiving client, they can be played/rendered in the user equipment in a synchronous way and to overcome all the disadvantages of the known methods.

### Description of the invention

The invention comprises a method for synchronizing at least two media streams within one push-to-talk-over-cellular session where the service providing receiving client receives at least one first message containing first media and at least one second message containing second media and said first message contains a first relative time information, e. g. a RTP timestamp and said second message contains a second relative (e. g. RTP timestamp) time information and that first relative time information and second relative time information could be used by the service providing receiving client for delivering both media to a media recipient in a synchronized way.

The invention extends the sending PoC client, PoC server and receiving PoC client in the way that the synchronization information needed for the media streams are provided in the Talk Burst Control Protocol messages or Media Burst Control Protocol messages of the Media-floor Control Entity.

It is to be understood that both the foregoing general description and the following detailed description are exemplary and explanatory and are intended to provide further explanation of the invention as claimed.

If the media stream is of continuous media type (real time), it has to be bound to a Media-floor Control Entity, which guarantees that only one PoC Client can send the media at the same time. A Media-floor Control Entity is the control entity that arbitrates requests from the PoC Clients for the right to send media of one or multiple media stream bound to the Media-floor Control Entity. The Media-floor Control Entity is a state machine located in both PoC Client and PoC Server. Media-floor Control Entity binding is negotiated during PoC Session initiation and modification. The Media-floor Control Entity can work based on Media Burst Control Protocol (MBCP) or Talk Burst Control Protocol (TBCP).

The Media Burst Control Protocol or Talk Burst Control Protocol messages can be extended with new optional fields which would carry for each media stream its current relative time (e. g. a RTP timestamp).
The receiving PoC Client can then synchronize the incoming media streams, even without RTCP SR messages.

### Description of the drawings

Figure 1 shows the call flow for the successful request for permission to send media,
Figure 2 shows a successful PoC Session initiation (originating side), in which the SIP INVITE request from originating PoC User is considered as implicit TBCP Talk Burst Request message.

The call flow is based on the OMA PoCv2.0 standardization documents.
1. The PoC Client A requests the permission to send media of the media streams bound to the Media-floor Control Entity using Talk Burst Request. This message is extended with identification of each media stream bound to the Media-floor Control Entity and the current relative time (e. g. RTP timestamp) for the media stream. The current relative times (e. g. RTP timestamps) are related to the time of the Talk Burst Request message creation.
2. The PoC Server X (controlling), grants the PoC Client A permission to send media, Talk Burst Granted.
3. For each PoC Client in the PoC session, which uses the media streams bound to the Media-floor Control Entity, other than PoC Client A, the PoC Server X (controlling), sends the Talk Burst Taken message to inform the PoC Client, PoC Client B1, that PoC Client A has permission to send media. This message is also extended with identification of each media stream bound to the Media-floor Control Entity and the relative time (e. g. RTP timestamp) for the media stream which were given in message 1., Talk Burst Request. If the media streams are identified differently the the PoC Session between PoC Client A and PoC Server and between PoC Server and POC Client B, the PoC Server translate the identification accordingly.

Since the PoC Client B1 received the relative time (RTP timestamps) for each media stream (within message containing the media) and since the PoC Client B1 also receives for all the media streams the relative times (e. g. RTP timestamps) related to the Talk Burst Request time , the terminating PoC Client can synchronize all the media stream playbacks.

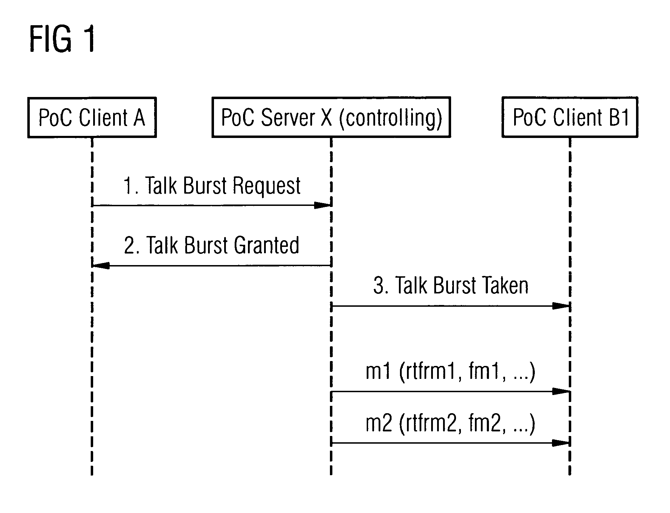

The message 1., Talk Burst Request, in Figure 1 is not always mandatory; the message SIP INVITE request from originating PoC User can also be considered as implicit TBCP Talk Burst Request message. In such case, only message 2., Talk Burst Granted, and message 3., Talk Burst Taken, are used and the information provided in message 1. is replaced with information provided in SIP INVITE request.

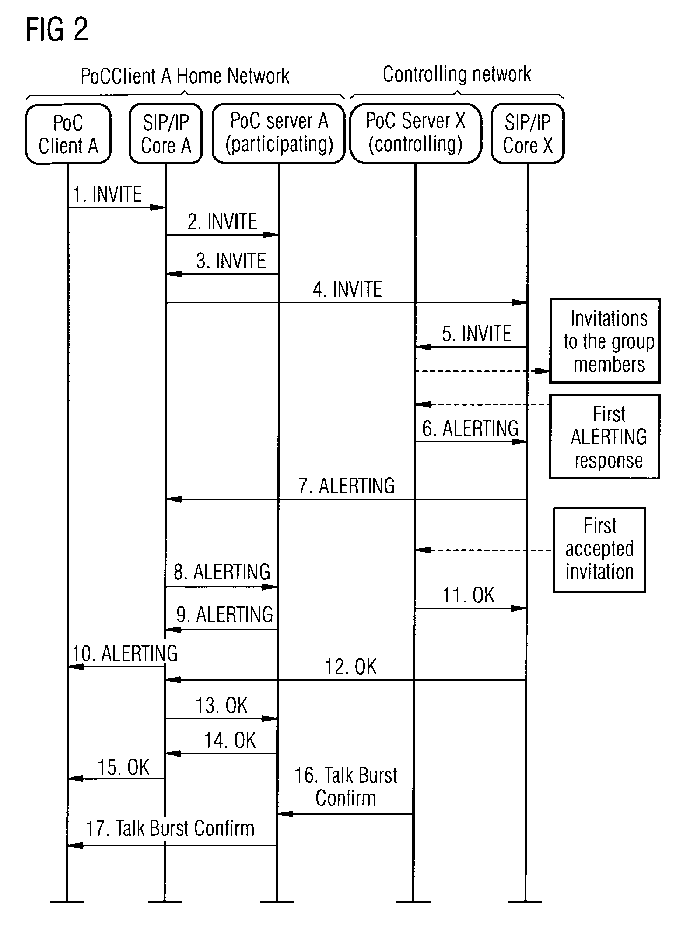

The SDP parameters of initial INVITE request messages (1. INVITE, 2. INVITE, 3. INVITE, 4. INVITE, 5. INVITE in Figure 2) are extended by PoC client A with parameters that contain an initial relative time (e. g. RTP timestamp) for each offered media stream of the continuous media type.
These parameters are then used by the PoC Server X (controlling), in message 3. Talk Burst Taken messages as shown in Figure 1 in case the INVITE is considered as an implicit TBCP Talk Burst Request message.

In one embodiment of the invention, the Talk Burst Request message (or Media Burst Request message) contains for each associated media stream a set of optional fields. Each set contains the following information:
- media stream identification (e. g. Session Description Protocol SDP label value used during PoC Session initiation or modification), which uniquely identifies the media stream in PoC Session for the PoC Server and sending PoC Client
- current relative time (e. g. RTP timestamp) of the media stream (e. g. related to the time of the Talk Burst Request message creation).

Additionally, if multiple Media-floor Control Entities are part of the PoC Session, the following information can be inserted into Talk Burst Request message (or Media Burst Request message) as an optional field:
- current absolute (e. g. NTP timestamp) time information (related to the time of the Talk Burst Request message creation).

In a further embodiment of the invention, the Talk Burst Taken message (or Media Burst Taken message) contains for each associated media stream a set of optional fields. Each set contains the following information:
- media stream identification (e. g. SDP label value used during PoC Session initiation or modification), which uniquely identifies the media stream in PoC Session for the PoC Server and receiving PoC Client. The PoC Server translates the media stream identification used by the sending PoC Client in Talk Burst Request message (or INVITE or Media Burst Request message) to the media stream identification known by the receiving PoC Client.
- relative time (e. g. RTP timestamp) values of the media stream as received in the Talk Burst Request message (or INVITE or Media Burst Request message) of the sending PoC Client

Additionally, if multiple Media-floor Control Entities are part of the PoC Session, the following information can be inserted into Talk Burst Taken message (or Media Burst Taken message) as optional field:
- current absolute (e. g. NTP timestamp) time information as received in the Talk Burst Request message (or INVITE or Media Burst Request message) of the sending PoC Client

In a further embodiment, the INVITE message contains in SDP in the media-level section of each media stream the following information:
- current relative time (e. g. RTP timestamp) of the media stream (related to the time of the INVITE message was created).

Additionally, if multiple Media-floor Control Entities are part of the PoC Session, the following information can be inserted into INVITE message:
- current absolute (NTP timestamp) time information (related to the time of the INVITE message creation).

In another embodiment of the invention, the receiving PoC Clients synchronizes the media streams in the following way: The PoC Session contains two media streams (m1 and m2) bound to the same Media-floor Control Entity.
The media stream m1 is sampled with well know frequency fm1 (given in the standard). The media stream m2 is sampled with well know frequency fm2 (given in the standard).
The sending PoC Client states in the Talk Burst Request that at the Talk Burst Request generation, the media stream m1 has the current relative time rtfrm1 and the media stream m2 has the current relative time rtfrm2. The PoC Server provides this information to the receiving PoC Clients.
The sending PoC Client receives Talk Burst Granted.
The sending PoC Client sends media of both the media steams and includes in the messages containing the media the relative time formation of the media generation at the PoC Client.

Now the receiving PoC Client wants to play media of the media stream m1 and m2 in synchronized fashion.
If the receiving PoC Client wants to play m1 media with the relative time information X, the receiving PoC Client needs to figure out the relative time information Y for the m2 media based on of the provided information (X, fm1, fm2, rtfrm1, rtfrm2). The formula is Y=((X-rtfrm1)/fm1)*fm2+rtfrm2

In another embodiment of the invention, using MBCP, the PoC Session contains two media streams (m1 and m2) bound to the different Media-floor Control Entities (m1 to mce1, m2 to mce2). Media stream m1 is sampled with well know frequency fm1 (given in the standard) and media stream m2 is sampled with well know frequency fm2 (given in the standard).
The sending PoC Client states in the Talk Burst Request of mce1 that at the Talk Burst Request generation, the media stream m1 has the current relative time rtfrm1 and the absolute time (in seconds) when Talk Burst Request was generated is atmce1fr1).
The sending PoC Client receives Talk Burst Granted. Then the sending PoC Client sends media of the media steams m1 and includes in the messages containing the media the relative time formation of the media generation at the PoC Client. In parallel, the sending PoC Client states in the Talk Burst Request of mce2 that at the Talk Burst Request generation, the media stream m2 has the current relative time rtfrm2 and the absolute time (in seconds) when Talk Burst Request was generated is atmce2fr2.
The sending PoC Client receives Talk Burst Granted.
The sending PoC Client sends media of both the media steams and includes in the messages containing the media the relative time formation of the media generation at the PoC Client.
Now the receiving PoC Client wants to play media of the media stream m1 and m2 in synchronized fashion.
So if the receiving PoC Client wants to play m1 media with the relative time information X, the receiving PoC Client needs to figure out the relative time information Y for the m2 media based on of the provided information (X, atmce2fr2, atmcelfr1, fm1, fm2, rtfrm1, rtfrm2). The formula is Y=(((X-rtfrm1)/fm1)+atmce1fr1-atmce2fr2)*fm2+rtfrm2.

## Claims

1. Method for synchronizing at least two media streams within a push-to-talk-over-cellular session wherein service providing receiving client
receives at least one first message containing first media and at least one second message containing second media, whereas first media and second media should be delivered at the receiving client in a synchronized form and
said first message contains a first relative time information and said second message contains a second relative time information and that first and second relative time information are used by the service providing receiving client for delivering both media to a media recipient in a synchronized way.

2. The method for synchronizing media streams of claim 1,
wherein said first media and said second media message are containing different media types.

3. The method for synchronizing media streams of claim 1 or 2,
wherein the further time information is provided in the relative time information, in particular a RTP timestamp, for each media stream valid at message generation time, and which are included into the message with which permission for sending media was requested (Talk Burst Request) and / or the message with which information about granting permission for sending media was given to the receiving clients (Talk Burst Taken).

4. The method for synchronizing media streams one of claims 1 to 3,
wherein the sending client (PoC Client A) enters the time information on the message with which permission for sending media is requested (Talk Burst Request).

5. The method for synchronizing media streams of claim 1 or 2,
wherein a PoC Server enters the time information on the message with which information about granting permission for sending media was given to the receiving clients (Talk Burst Taken) based on the time information of the message with which permission for sending media was requested by the sending client (Talk Burst Request).

6. The method for synchronizing media streams of claim 1 or 2,
wherein the receiving client synchronizes media streams based on the time information of the message with which information about granting permission for sending media was given (Talk Burst Taken) and the time information provided in the messages containing the media.

7. The method for synchronizing media streams of claim 1 or 2,
wherein the time information is provided in the relative time information, in particular a RTP timestamp, for each media stream valid at message generation time, and are included into SIP INVITE initiating PoC Session and the message with which information about granting permission for sending media was given to the receiving clients (Talk Burst Taken).

8. The method for synchronizing media streams of claim 1 or 2,
wherein the sending client enters the time information in the SIP INVITE message initiating PoC Session.

9. The method for synchronizing media streams of claim 1 or 2,
wherein the PoC Server enters the time information in the message with which information about granting permission for sending media was given to the receiving clients (Talk Burst Taken) based on the time information of the SIP INVITE message initiating PoC Session provided by the sending PoC Client.

10. The method for synchronizing media streams of claim 1 or 2,
wherein the receiving client synchronizes media stream based on the time information of the message with which information about granting permission for sending media was given (Talk Burst Taken) and the time information provided in the messages containing the media.

11. The method for synchronizing media streams of one of claims 1 to 3, wherein
the media-floor control entity uses the Talk Burst Control Protocol TBCP.

12. The method for synchronizing media streams of one of claims 1 to 3, wherein
the media-floor control entity uses the Media Burst Control Protocol MBCP.

13. The method for synchronizing media streams of one of claims 1 to 3, wherein
there are at least two media-floor control entities, which are independent from each other, and the messages contain also current absolute time information, in particular a NTP timestamp to allow synchronization between independent Burst Requests.

14. A media-floor control entity for the execution of a method for synchronizing within a push-over-cellular session at least two different media streams of one of
the claims 1 to 13, which
receives at least one first message containing first media and at least one second message containing second media, whereas first media and second media should be delivered at the receiving client in a synchronized form and said first message contains a first time information and said second message contains a second time information and delivers said first message and said second message to at least one receiving service providing client entity,
wherein that first and second time information is usable by said service providing client for delivering both media to a media recipient in a synchronized way.
